# EUROPEAN PATENT SPECIFICATION

(11) **EP 2 927 045 B1**
(45) Date of publication and mention of the grant of the patent: **13.01.2021**
(21) Application number: 14163341.2
(22) Date of filing: 03.04.2014
(51) Int. Cl.: B60L 1/00, B60L 9/00, B60L 53/00, B60L 53/14, B60L 53/22, B60L 53/30, B60L 53/65, B61D 3/18, B60L 53/67, B60L 53/68, B60L 53/66

(54) **Range extending an electric vehicle**
Reichweitenvergrößerung eines Elektrofahrzeugs
Extension de plage d'un véhicule électrique

(43) Date of publication of application: 07.10.2015
(73) Proprietor: Atos IT Solutions and Services GmbH, 1210 Wien (AT)
(72) Inventor: Fasching, Michael, 1140 Wien (AT)
(74) Representative: Patentanwaltskanzlei WILHELM & BECK

(56) References cited:
- EP-A1- 2 572 922
- DE-A1-102010 010 119
- US-A- 4 161 682
- US-A1- 2012 074 901

## Description

Present invention concerns a technology for extending the range of an electric vehicle. More specifically, present invention concerns charging management of an electric vehicle.

An electric vehicle is a vehicle for passengers or cargo that may be propelled by means of an electric engine. The electric engine is powered from an energy storage that usually comes as an electric battery. The battery must be recharged regularly and charging time usually exceeds the discharging time under normal vehicle operation conditions.

Typically, a purely electric vehicle may have a cruising radius of about 100 km, depending on a route, a style of driving and the use of additional electric loads on board of the vehicle, such as an electric heating or an air conditioning system. For a user in an urban area, the cruising radius may cover most of the destinations of the user most of the time.

For longer routes, however, the electric vehicle may either be recharged along the track. As charging may take several hours, recharging is rarely done for range extension. Alternatively, its range may be extended by a range extender or a hybrid engine. In these cases, a combustible fuel is used for powering a combustion engine that either propels the vehicle or recharges the battery. With this technology, the electric vehicle may have an increased cruising radius of about 500 km. However, the combustion engine is heavy and expensive and carrying it around on short tracks is not desirable from an energy point of view. Industrial pollution is also increased due to the combustion.

Another way to extend the cruising radius of a vehicle is to cover some of the distance of a desired track by motor rail. The electric vehicle drives to a train station where the vehicle is loaded onto a train wagon. The train then travels to another station towards the destination of the electric vehicle. The vehicle is unloaded from the train wagon and may drive to its final destination. However, this only works if the distance to be covered by the electric vehicle from its initial position to the first station and from the second station to its final destination is smaller than its cruising radius. As motor rail stations are generally spread unevenly and scarcely and some connections are not served over the whole year, the user may end up with an empty vehicle battery somewhere between the second station and his final destination.

EP 2 572 922 A1 concerns a method of charging an energy unit that is disposed on a moving train.

DE 10 2010 010 119 A1 proposes a transport system for people and vehicles. In this, an electric battery of a vehicle on board a train may be charged while travelling.

US 2012/0074901 A1 discloses a centralized charging station.

US 4 161 682 discloses a portable battery charger comprising a housing, handles and wheels.

It is an object of present invention to provide an improved charger for an electric vehicle aboard a train. The invention solves this object through a charger according to the enclosed independent claim 1.

Dependent claims give advantageous embodiments.

A charger for an electric vehicle on a train wagon comprises a first electric interface for connecting to a busbar of the train wagon, a second electric interface for connecting to the vehicle and a power converter for converting power from the first interface into power for the second interface. The charger comprises a housing, a handle attached to the housing and a set of wheels such as to ease moving the charger.

The busbar may be part of a power line for distributing electric power along several wagons of a train. First uses for the busbar included electric heating, which is why it is also referred to as heating line. On a modern train wagon, many other consumers may also be powered from the busbar, such as air conditioning, lighting and communication equipment. If the train is electrically powered, the busbar is usually fed from the power line to the electric locomotive. In other cases, for instance when the locomotive is powered on a diesel engine, a dedicated generator on the locomotive may be used for powering the busbar.

Independent from this, power on the busbar may be "unclean" in that it may change its absolute voltage, its alternating frequency, contain glitches or spikes or even have power failures of different severities and lengths (voltage sags, brownouts, blackouts). There may also be restrictions to the kind of load that is admissible for connection to the busbar.

The charger converts the electric energy provided by the busbar in such a way that the electric vehicle may be charged without the risk of damage. The power converter is preferred to be adapted to remove spikes and glitches from the provided electric power. Ideally, the power provided on the second interface allows charging that does not differ from usual charging from a public energy network like a 400V respectively 230V / 50Hz or 110 V / 60Hz AC or similar network.

In an especially preferred embodiment, the charger is adapted to be moved between train wagons. As electric vehicles are not very wide spread, there may not be a sufficient demand for a charger on every train wagon suited for transporting vehicles. Some wagons may be adapted to alternatively transport other goods than electric vehicles, in which case the charger would not be required.

By making the charger movable between train wagons, it is possible to supply electricity for charging electric vehicles only on such wagons that carry electric vehicles. The charger may be small in size and light in weight so that it can be moved by one person alone. In one embodiment, the charger may be small and light enough to be carried by one person. In another embodiment, the charger may be adapted to be moved by means of a hand truck, a fork lift or similar machinery. According to another option, a set of wheels may be incorporated by the charger such as to ease moving the charger horizontally.

According to another option, the charger may be moved by machinery such as a power lifter, a crane, or a special powered vehicle. In both cases it is preferred that the charger is adapted to be brought to different positions on the train wagon so that it can be positioned next to a vehicle or a group of vehicles that need charging. A charger may also be adapted to be easily movable from the train wagon to a platform when the train is in a train station or between train wagons.

It is furthermore preferred that the power converter is adapted to provide a constant voltage on the second interface. The provided voltage may be 230 V or any other standardized voltage that a charging system of the electric vehicle accepts. The power converter may further be adapted to operate on different power ratings on the first interface. In one case the power rating on the first interface is detected automatically. It is especially preferred that the power converter accepts on the first interface both direct current (DC) and alternating current (AC). It is furthermore preferred that the power converter is adapted to accept power on the first interface that meets an official specification for power on the busbar, such as the UIC 550 specification. The acceptance range of the charger may even exceed these specifications, especially with respect to voltage or AC-frequency.

According to another preferred option, the power converter is further adapted to present an essentially non-inductive load to an energy provider connected to the first interface. This may be of importance if the busbar is powered by an electrical generator with a rectifier that is not adapted to powering inductive loads. The charger may thus be used in combination with such old technology rectifiers as well.

The charger may comprise several second interfaces for connecting to different electric vehicles and the charger may be adapted to provide independent charging of the vehicles through the second interfaces. A single charger may thus suffice to charge two or more electric vehicles. The number of chargers per wagon or per train may thus be reduced. Moving the chargers to provide them where they are needed may thus be eased. This may result in a shorter stay at a station where electric cars are loaded or unloaded.

According to another option, the charger comprises a battery for providing energy to the second interface when power on the first interface is low or off. The battery may aid in bridging temporary power shortages or outages. An outage may for instance occur when the train moves from one electrical network to another, such as when crossing a border between countries. Power may also go down if the train wagon is separated from the locomotive, such as during shunting. The battery may also be of use when power on the first interface is lower than required. Additional energy may then be added from the battery to sustain power on the second interface.

According to another embodiment, the charger is adapted to charge the vehicle dependent on a remaining travel time of the vehicle on the train wagon. For instance, several electric vehicles may be charged in succession rather than in parallel so that the load on the busbar is reduced. All electric vehicles may still be sufficiently charged when the train wagon reaches the train station where the vehicles are to be unloaded.

The second interface of the charger may be adapted to provide data exchange with the vehicle, wherein the data concerns a charging process of the vehicle. In combination with the afore said travel time-related charging management, the charging process may be negotiated better between the vehicle and the charger. For instance, if there is an urgent need for electrical power on one of vehicles, charging this vehicle may have higher precedence than charging any other vehicle. In another example, when the available power from the busbar is not sufficient for charging all electric vehicles sufficiently, allocation of the available energy to vehicles may be negotiated on the basis of technical requirement or prize.

The charger may also comprise a third interface for exchanging authorization, billing or reservation data with an external server computer. The third interface is preferred to be wireless and the external server computer is preferred to be reachable over at least one public network such as the Internet. This makes it easier to plan ahead and bring electric vehicles in need of charging and chargers together on the same train wagon.

A system for charging an electric vehicle during its transport on a train wagon comprises a charging device as described above wherein the charging device is installed on the train wagon, and a billing system for managing charging permissions and charging fees.

The billing system may run on a server computer that is external to the train wagon as mentioned above. The billing system may be used for physical grouping of vehicles in need of charging and one or several mobile chargers on the same train wagon. The billing system may also make sure that the energy dispensed to the electric vehicles is accounted for properly.

It is furthermore preferred that there is also provided a reservation system for reserving a place for the vehicle on the train wagon where the charging device may be used. The reservation system may help to determine demand for charging services on train even before the vehicles are loaded onto the train. This way, only such wagons may be equipped with a charger that carry vehicles in need of charging on a predetermined trip between two train stations.

As mentioned before, the billing system may comprise a server computer external to the charger. In this, it is preferred that the server computer comprises a wireless data interface for exchanging data with the vehicle, the charger or a user's computer. This way, the billing system and/or the reservation system may be reachable from different end devices so that a booking for the charging service of the vehicle on the train wagon may be made easily in advance.

A method for extending the cruising radius of an electric vehicles comprises steps of driving the vehicle to a first train station, loading the vehicle onto a train wagon, charging the vehicle while the wagon is moved from the first train station to a second train station and unloading the charged vehicle from the train wagon at the second train station.

The method may conveniently help to extend the range or cruising radius of an electric vehicle. Acceptance of the electric vehicle may thus be improved. This may help to reduce the general production of emissions that an ordinary vehicle with a combustion engine would generate.

The embodiments of the invention will now be discussed in more detail with reference to the accompanying Figures, in which
- Fig. 1: shows a system for hybrid transport;
- Fig. 2: shows a charger for the transport system of Fig. 1 and
- Fig. 3: shows a method for extending the cruising radius of an electric vehicle with the system of Fig. 1.

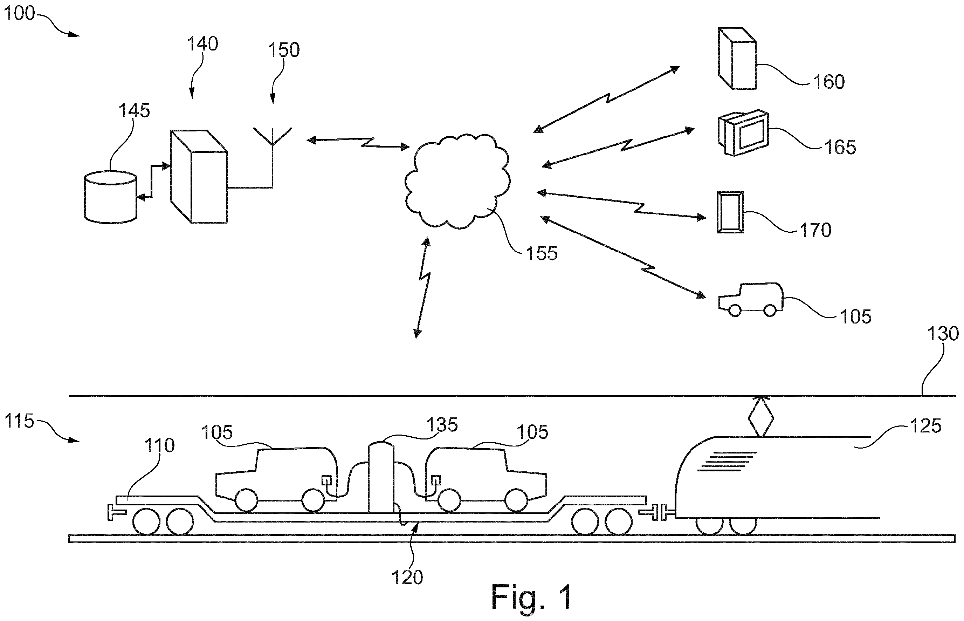

Fig. 1 shows a system 100 for hybrid transport. A vehicle 105 that is adapted for running on electric energy is transported on a wagon 110 of a train 115. For the purposes of this document, it is assumed that the vehicle 105 contains an electric engine for propelling the vehicle 105 and the engine is powered on electric energy stored inside an electric energy storage that is rechargeable. By convention, recharging the electric storage is referred to as recharging the vehicle 105. The wagon 110 may be comprised by a motor rail which is a train that also comprises a wagon 110 for passengers accompanying the vehicle 105. The wagon 110 may also be part of a car shuttle train or it may be a box car or similar.

The wagon 110 comprises a busbar 120 which is a power line to provide electric power in the wagon 110. The busbar 120 usually runs along the length of the train 115 and is powered from a facility on a locomotive 125. In one embodiment the locomotive 125 runs on electric power which it obtains from a contact wire 130. In this case, the busbar 120 is usually fed from the contact wire 130 through a transformer or similar adaption unit. In another embodiment the locomotive 125 is propelled by diesel engine and there is provided an electric generator that is either attached to the diesel engine or comprises its own diesel engine. In both cases, power ratings of the busbar 120 may follow a certain standard, for instance UIC 550. The busbar 120 may conduct DC or AC voltage in the range of about 1.5 to 3 kV. In the case of AC voltage, a frequency of the alternating current may lie for example near 16.7, 22 or 50 Hz.

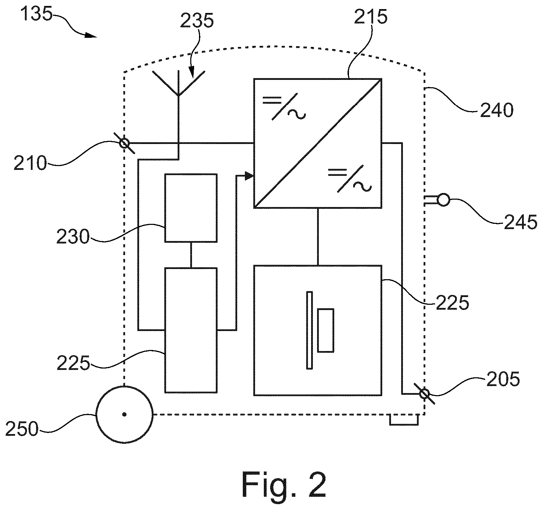

Installed aboard the wagon 110 is a charger 135 for connecting to the busbar 120 as well as one or several electric vehicles 105. The charger 135 is adapted to provide electrical power for charging the vehicle 105 from power provided by the busbar 120. The charger will be further explained in more detail with respect to Fig. 2. It is preferred that the charger 135 is mobile in that it is movable between wagons 110, between different positions on the wagon 110 or between the wagon 110 and a platform of a station where the train 115 stops. Movability of the charger 135 is preferred to allow a single person to handle the charger 135. This preferably comprises tasks of disconnecting, moving and connecting the charger 135.

The system 100 preferably further comprises a computer server 140 that may act as a billing and/or reservation system. There may be separate computer servers 140 for billing and reservation, too. The computer server 140 preferably comprises a database 145 for storing reservation, billing or time table data for the train 115. It further comprises an interface 150 for data communication. The interface 150 may be adapted to provide access via a wireless network.

It is preferred that there is a data connection between the interface 150 and the charger 135. This connection may run over a network 155 which may be a private or public network and be connected to the Internet or a mobile telecommunication system. The computer server 140 may also be reachable over the network 155 from another computer system 160, a fixed computer 165, a mobile computer 170 or a vehicle 105 while driving. When the mobile computer 170 comprises a so-called smartphone or tablet computer or the like, a dedicated piece of software that is known as "app" may be provided to the user for carrying out actions like reservation, status check or billing for a charging process of the vehicle 105 on the wagon 110.

The computer system 160 may correspond to a billing system and be adapted for handling payments. The fixed computer 165 may be any kind of general computer that is linked to the network 155 and the mobile computer 170 may be any kind of mobile computer, computing device or smartphone with the capability of communicating over the network 155.

By communicating with the computer server 140, a user on any of the terminal devices 160, 165, 170 or 105 may make a reservation for booking a charging service aboard the wagon 110 of the train 115. By communicating between the server computer 140 and the charger 135, authorization, identification and payment may be handled. It is preferred that reservation information is used to determine in advance how many electric vehicles 105 will be travelling on the same train 115. These vehicles 105 may then be grouped together on the same wagon 110 and one or several chargers 135 may be attached to that wagon 110. It is preferred to minimize the number of chargers 135 on the train 115 by using the reservation system.

Fig. 2 shows the charger 135 for the transport system 100 of Fig. 1. The charger 135 comprises a first electric interface 205 for connecting to the busbar 120 of wagon 110 of train 115 in Fig. 1 and a second electric interface 210 for connecting to the vehicle 105. To comply with different connection standards, different cables or connectors may be provided for this connection.

In one embodiment, another interface may be provided to the charger 135 for providing data exchange with the vehicle 105. The exchanged data may especially concern a charging process of the vehicle 105 and the exchanged data may comprise information on a charging current, an estimated remaining charging time, billing and reservation information. This data interface may be part of the second interface 210. In one embodiment the information is modulated on the electric energy flowing between the vehicle 105 and the charger 135.

Connected to the first and second interfaces 205, 210 is a power converter 215 for converting power from the busbar 120 to the vehicle 105. The power converter 215 is preferred to accept either direct or alternating current via the first interface 205. Accepted voltages on the first interface 205 match those likely to be used on board of the wagon 110. In one option the power converter 250 is adapted to represent an essentially non-inductive load to a power provider on the first interface 205. This property makes the charger 135 usable on a train 115 with a power supply that is not suited for inductive loads. The charger 135 is preferred to act as a mainly resistive load.

The power converter 215 is adapted to provide on the second interface 210 electric power with ratings that match the specification of the attached vehicle 105. In one embodiment, this may be alternating current of 230 V at 50 Hz or 110 V at 60 Hz. For connecting several vehicles 105 to one charger 135, the second interface 210 may be adapted for parallel loads or there may be provided several second interfaces 210. In one option, a dedicated power converter 215 is provided for each second interface 210.

Optionally, the charger 135 also comprises a battery 220 that is adapted for being loaded from electric energy via the first interface 205. The battery 220 may provide electric energy when power on the first interface 205 is low or off. The power converter 215 may then be run on energy that comes completely or in part from the battery 220.

It is preferred that the charger 135 also comprises a control unit 225 for controlling charging of vehicle 105. The control unit 225 may be attached to an interface 230 for interacting with a person such as a user of the vehicle 105. The human interface 230 may be adapted for entering identification, reservation or payment information. It may also be adapted for outputting similar information. The control unit 225 is preferred to be connected to a wireless interface 235 for communicating with computer server 140, for instance via the network 155. The elements of charger 135 are preferred to be contained in a housing 240. The housing 240 is preferred to be adapted to offer protection for the enclosed elements throughout weather conditions that may occur on an uncovered wagon 110 when the train 115 is moving.

Attached to the housing 240 may be one or several handles 245 for easing relocation of the charger 135 on a wagon 110, between wagons 110 or between the wagon 110 and a platform when the train 115 is in a station. In one option, there is also provided a set of wheels 250 for making relocation of the charger 135 easier.

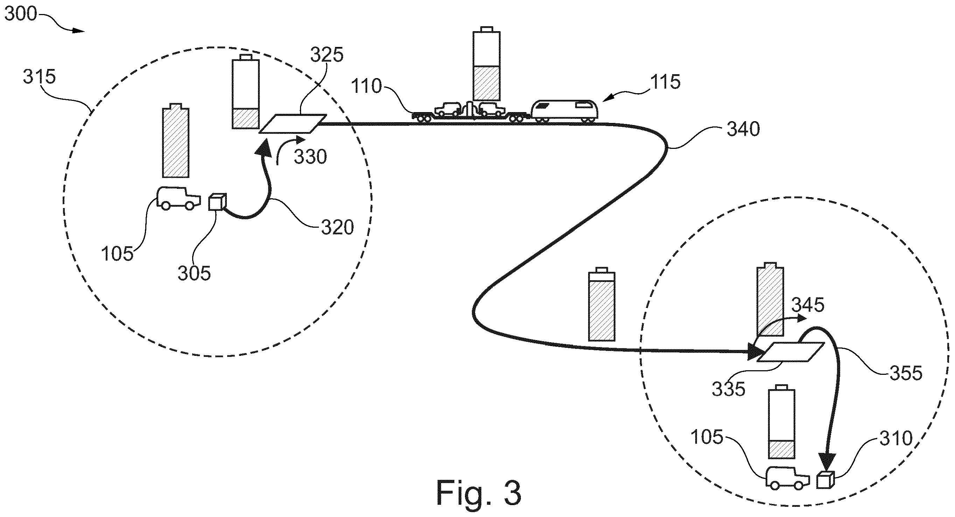

Fig. 3 shows a method 300 for extending the cruising radius of electric vehicle 105 with the system of Fig. 1. The depicted embodiment considers a situation where vehicle 105 is intended to be moved from a start location 305 to a destination 310. A cruising radius 315 around start location 305 gives an idea of how far the vehicle 105 may run from the start location 305 on a full battery. Charging status of the vehicle 105 is symbolized by a representation of a battery throughout the picture of Fig. 3.

As the destination 310 lies outside the cruising radius 315 around the start location 305, a part of the trip is made aboard the train 115. In a step 320, vehicle 105 drives from the start location 305 to a first train station 325 which is inside the cruising radius 315. Upon arriving at the first station 325, the electric vehicle 105 is more or less depleted of electric energy.

In a second step 330 the vehicle 105 is loaded onto the wagon 110 of train 115 at the first station 325. Then the train 115 drives from the first station 325 to a second station 335 in a third step 340. In the same step the vehicle 105 is loaded aboard the wagon 110 of train 115 by using the charger 135. When the train 115 with the vehicle 105 arrives at the second station 335, the vehicle 105 is more or less replenished with electric energy.

Upon arriving at the second station 335, vehicle 105 is unloaded from the wagon 110 in a fourth step 345. The final destination 310 lies within a second cruising radius 350 around the second station 335. The second cruising radius 350 is determined by the capacity and charging status of vehicle 105. In a fifth step 355 the vehicle 105 drives from the second station 335 to its final destination 310. When the vehicle 105 arrives at its destination 310, it may again be more or less depleted of electric energy.

### Reference List

- 100: system
- 105: electric vehicle
- 110: wagon
- 115: train
- 120: busbar
- 125: locomotive
- 130: contact wire
- 135: charger
- 140: computer server
- 145: database
- 150: interface
- 155: network
- 160: computer system
- 165: fixed computer
- 170: mobile computer
- 205: first interface
- 210: second interface
- 215: power converter
- 220: battery
- 225: control unit
- 230: human interface
- 235: wireless interface
- 240: housing
- 245: handle
- 250: wheel
- 300: method
- 305: start location
- 310: destination
- 315: cruising radius
- 320: first step: drive from start location to first train station
- 325: first station
- 330: second step: loading vehicle on wagon
- 335: second train station
- 340: third step: driving and charging
- 345: fourth step: unloading vehicle
- 350: cruising radius
- 355: fifth step: drive from second station to destination

## Claims

1. Charger (135) for an electric vehicle (105) on a train wagon (110), the charger (135) comprising:
- a first electric interface (205) for connecting to or disconnecting from a busbar (120) of the train wagon (110);
- a second electric interface (210) for connecting to or disconnecting from the vehicle (105) and to exchange electric energy to charge the electric vehicle;
- a power converter (215) for converting power from the first interface (205) into power for the second interface (210);
**characterized in** also comprising:
- a housing (240);
- a handle (245) attached to the housing (240);
- a set of wheels (250) such as to ease moving the charger (135); and
- a data interface adapted to provide data exchange with the vehicle (105), the data concerning a charging process of the vehicle (105), wherein the data interface is a part of the second interface (210), and wherein the data interface is configured to modulate the data onto the electric energy exchanged between the charger (135) and the electric vehicle (105).

2. Charger (135) according to the previous claim, wherein the power converter (215) is adapted to provide a constant voltage on the second interface (210), the voltage being a standardized voltage that a charging system of the electric vehicle accepts.

3. Charger (135) according to one of the previous claims, wherein the power converter (215) is adapted to operate on different power ratings on the first interface (205) and the power ratings each meet an official specification for power on the busbar (120), such as the UIC 550 specification,.

4. Charger (135) according to of the previous claims, further comprising a battery (225) for providing energy to the second interface (210) when power on the first interface (205) is low or off, wherein the battery (225) is adapted for being loaded from electric energy via the first interface (205).

5. Charger (135) according to one of the previous claims wherein the charger (135) is adapted to charge the vehicle (105) dependent on a remaining travel time of the vehicle (105) on the train wagon (110).

6. Charger (135) according to one of the previous claims, further comprising a third interface (235) for exchanging authorisation, billing or reservation data with an external server computer.

## Patentansprüche

1. Ladegerät (135) für ein Elektrofahrzeug (105) auf einem Eisenbahnwagen (110), wobei das Ladegerät (135) umfasst:
- eine erste elektrische Schnittstelle (205) zum Verbinden mit oder Trennen von einer Sammelschiene (120) des Eisenbahnwagens (110);
- eine zweite elektrische Schnittstelle (210) zum Verbinden mit oder Trennen von dem Fahrzeug (105) und zum Austauschen von elektrischer Energie zum Laden des Elektrofahrzeugs;
- einen Leistungswandler (215) zum Umwandeln von Leistung aus der ersten Schnittstelle (205) in Leistung für die zweite Schnittstelle (210);
**dadurch gekennzeichnet, dass** es ferner umfasst:
- ein Gehäuse (240);
- einen am Gehäuse (240) angebrachten Griff (245);
- einen Satz von Rädern (250), die das Bewegen des Ladegeräts (135) erleichtern; und
- eine Datenschnittstelle, die dazu ausgelegt ist, einen Datenaustausch mit dem Fahrzeug (105) bereitzustellen, wobei die Daten einen Ladevorgang des Fahrzeugs (105) betreffen, wobei die Datenschnittstelle ein Teil der zweiten Schnittstelle (210) ist und wobei die Datenschnittstelle dazu ausgelegt ist, die Daten auf die zwischen dem Ladegerät (135) und dem Elektrofahrzeug (105) ausgetauschte elektrische Energie zu modulieren.

2. Ladegerät (135) gemäß dem vorhergehenden Anspruch, wobei der Leistungswandler (215) dazu ausgelegt ist, eine konstante Spannung an der zweiten Schnittstelle (210) bereitzustellen, wobei die Spannung eine standardisierte Spannung ist, die durch ein Ladesystem des Elektrofahrzeugs akzeptiert wird.

3. Ladegerät (135) gemäß einem der vorhergehenden Ansprüche, wobei der Leistungswandler (215) dazu ausgelegt ist, mit unterschiedlichen Nennleistungen an der ersten Schnittstelle (205) zu arbeiten, und die Nennleistungen jeweils einer offiziellen Spezifikation für die Leistung auf der Sammelschiene (120) entsprechen, wie z. B. der Spezifikation UIC 550.

4. Ladegerät (135) gemäß einem der vorhergehenden Ansprüche, ferner umfassend einen Akku (225) zum Liefern von Energie an die zweite Schnittstelle (210), wenn die Leistung an der ersten Schnittstelle (205) niedrig oder ausgeschaltet ist, wobei der Akku (225) dazu ausgelegt ist, über die erste Schnittstelle (205) mit elektrischer Energie geladen zu werden.

5. Ladegerät (135) gemäß einem der vorhergehenden Ansprüche, wobei das Ladegerät (135) dazu ausgelegt ist, das Fahrzeug (105) in Abhängigkeit von einer Restfahrzeit des Fahrzeugs (105) auf dem Eisenbahnwagen (110) zu laden.

6. Ladegerät (135) gemäß einem der vorhergehenden Ansprüche, ferner umfassend eine dritte Schnittstelle (235) zum Austauschen von Autorisierungs-, Rechnungs- oder Reservierungsdaten mit einem externen Server-Computer.

## Revendications

1. Chargeur (135) pour un véhicule électrique (105) sur un wagon (110) de train, le chargeur (135) comprenant :
- une première interface électrique (205) destinée à se connecter à une barre omnibus (120) du wagon (110) de train ou à s'en déconnecter ;
- une deuxième interface électrique (210) destinée à se connecter au véhicule (105) ou à s'en déconnecter et pour échanger de l'énergie électrique afin de charger le véhicule électrique ;
- un convertisseur de puissance (215) destiné à convertir de la puissance issue de la première interface (205) en de la puissance pour la deuxième interface (210) ;
**caractérisé en ce qu'**il comprend également :
- un caisson (240) ;
- une poignée (245) attachée au caisson (240) ;
- un jeu de roues (250) destiné à faciliter le déplacement du chargeur (135) ; et
- une interface de données adaptée à assurer un échange de données avec le véhicule (105), les données concernant un processus de charge du véhicule (105), l'interface de données faisant partie de la deuxième interface (210), et l'interface de données étant configurée pour moduler les données sur l'énergie électrique échangée entre le chargeur (135) et le véhicule électrique (105).

2. Chargeur (135) selon la revendication précédente, dans lequel le convertisseur de puissance (215) est adapté à fournir une tension constante sur la deuxième interface (210), la tension étant une tension normalisée acceptée par un système de charge du véhicule électrique.

3. Chargeur (135) selon l'une des revendications précédentes, dans lequel le convertisseur de puissance (215) est adapté à fonctionner sur des puissances assignées différentes sur la première interface (205) et les puissances assignées sont chacune conformes à une spécification officielle de puissance sur la barre omnibus (120), telle que la spécification UIC 550.

4. Chargeur (135) selon l'une des revendications précédentes, comprenant en outre une batterie (225) destinée à fournir de l'énergie à la deuxième interface (210) lorsque la puissance sur la première interface (205) est faible ou coupée, la batterie (225) étant adaptée à être chargée par de l'énergie électrique via la première interface (205).

5. Chargeur (135) selon l'une des revendications précédentes, lequel chargeur (135) est adapté à charger le véhicule (105) en fonction d'une durée de trajet restante du véhicule (105) sur le wagon (110) de train.

6. Chargeur (135) selon l'une des revendications précédentes, comprenant en outre une troisième interface (235) destinée à échanger des données d'autorisation, de facturation ou de réservation avec un ordinateur serveur externe.
